# EUROPEAN PATENT APPLICATION

(11) **EP 4 509 259 A1**
(43) Date of publication of application: **19.02.2025**
(21) Application number: 23787320.3
(22) Date of filing: 24.03.2023
(51) Int. Cl.: B23P 6/00, B60S 5/00

(54) **REPAIR CUP FOR A SEATING CUP OF A HYDRAULIC UNIT OF AN AUTOMATIC TRANSMISSION (EMBODIMENTS)**

(30) Priority: 14.04.2022 RU 2022110439
(71) Applicant: Closed Joint Stock Company "Kinergo", Minsk, 220108 (BY)
(72) Inventor: SHATSKOU, Aliaksandr Vyacheslavovich, Tarasovo village, 223018 (BY)
(74) Representative: Bury & Bury
(86) International application number: PCT/BY2023/000001
(87) International publication number: WO 2023/197053

(57) **Abstract**

The invention is intended for restoring the operation of a hydraulic unit of an automatic transmission. A repair unit for a seating cup of a hydraulic unit consists of a hydraulic accumulator having an external thread on the lower part of its body, and a repair cup with an internal thread for fastening the hydraulic accumulator. The repair cup has an outside diameter that is less than the inside diameter of the seating cup and greater than the diameter of a circle circumscribed around openings provided in the bottom of the seating cup for technical fluids and for fastening the hydraulic unit. In a first embodiment, the repair cup has an inside diameter that is configured to permit installation of the hydraulic accumulator of the repair unit inside the repair cup. In a second embodiment, the repair cup has an inside diameter greater than the diameter of a circle circumscribed around openings provided in the bottom of the seating cup for technical fluids and for fastening the hydraulic unit. The repair unit makes it possible to restore the operability of a seating cup by the additional installation of a repair cup inside the seating cup, and to efficiently repair the hydraulic unit of an automatic transmission without the need to replace the hydraulic unit or to remove the damaged seating cup.

## Description

The invention relates to the repair of machine parts and particularly to restore the operation of a hydraulic unit of an automatic transmission by means of a repair unit for a seating cup of a hydraulic unit of an automatic transmission.

The hydraulic unit of the automatic transmission passes the transmission fluid through the channels and transmits the fluid pressure to the mechanical elements of the gearbox, thereby enabling the gears to be turned on and off in an automatic mode. The high pressure in the system, the cyclic loads, and the instability of the material of the hydraulic unit of the automatic transmission, often an aluminum alloy, over time leads to microcracks and destruction of the seating cup of the hydraulic unit of the automatic transmission, which in turn leads to the need for repair.

A technical solution is known for repairing and restoring the operability of a metal structure, including for reinforcing a portion of a metal structure weakened by defects (weld seams, cracks, dents, etc.) [1], where a patch is proposed as a repair solution.

A technical solution for restoring the outer cylindrical surfaces [2] is also known, which constitutes a device comprising a part mounting device, a heating source and a cooling fluid supply system, in which, in particular, the device for mounting the part is made in the form of a fixed plate, on one side of which a bracket is fixed equipped with the opening, in which a spring-loaded rod is installed with the possibility of its reciprocating movement, a pneumatic cylinder is mounted on the other side thereof for reciprocating movement of the rod, and a prism guide.

These technical solutions due to design features are not applicable for repairing a hydraulic unit of an automatic transmission.

A technical solution is known to restore the operation of the hydraulic unit of the automatic transmission [3], in which the entire hydraulic unit of the automatic transmission is replaced to restore the operation of the hydraulic unit of the automatic transmission, which is an expensive process, or its washing, which in case of damage to the seating cup of the hydraulic unit of the automatic transmission, is not applicable.

The closest analog is the technical solution aimed at restoring the operation of a hydraulic unit of an automatic transmission [4], wherein the damaged (deformed or cracked) seating cup is replaced with an undamaged, similar seating cup. The damaged seating cup is almost completely removed, leaving only the bottom to which the undamaged seating cup is attached.

Since removal of the old damaged cup is carried out by milling on a numerically controlled machine, the process requires high time and labor costs for highly qualified specialists, as well as the presence of suitable manufacturing capacities together with large and high energy consuming equipment. In addition, this requires increased safety measures.

Aimed technical task is to significantly simplify and reduce the cost of repairing and restoring the operation of a hydraulic unit of an automatic transmission.

In order to solve the stated problem, a repair unit for a seating cup of a hydraulic unit of an automatic transmission is provided, consisting of the hydraulic accumulator with an external thread on the lower part of the body and the repair cup with an internal thread for fixing the hydraulic accumulator, wherein the repair cup is made with:
- an outer diameter smaller than the inner diameter of the seating cup and larger than the diameter of the circle circumscribed around the openings for technical fluids and fixing the hydraulic unit at the bottom of the seating cup;
- an inner diameter configured to accommodate the hydraulic accumulator of the proposed repair unit within the repair cup.

In an embodiment of the repair unit the repair cup is made with a sealing ring, as well as with a groove for its placing.

In an embodiment of the repair unit the hydraulic accumulator is manufactured with a sealing ring, as well as with a groove for its placing.

In an embodiment of the repair unit the wall thickness of the repair cup is 2 to 6.50 mm.

In order to solve the stated problem, there is also provided a second version of the repair unit for the seating cup of the hydraulic unit of the automatic transmission, consisting of a hydraulic accumulator with external thread on the lower part of the body and a repair cup with internal thread for fixing the hydraulic accumulator and openings in the bottom for technical fluids and fixing the hydraulic unit, wherein the repair cup is made with:
- an outer diameter smaller than the inner diameter of the seating cup and greater than the diameter of a circle circumscribed around the openings for technical fluids and fixing the hydraulic unit at the bottom of the seating cup;
- an inner diameter greater than the diameter of a circle circumscribed around the openings for technical fluids and fixing the hydraulic unit at the bottom of the repair cup;
- at least two openings for fixing the hydraulic unit coinciding with the openings for fixing the hydraulic unit in the bottom of the mounting cup;
- at least one opening for technical fluids configured to alignment with the opening for technical fluids at the bottom of the seating cup.

In an embodiment of the repair unit the repair cup is made with a sealing ring, as well as with a groove for its placing.

In an embodiment of the repair unit a hydraulic accumulator is manufactured with a sealing ring, as well as with a groove for its placing.

In an embodiment of the repair unit the wall thickness of the repair cup is 2 to 6.50 mm

In particular embodiments, the opening for technical fluids may be configured to alignment with the opening for technical fluid at the bottom of the seating cup by means of grooves, made on the outer surface of the bottom of the repair cup.

In particular embodiments, the opening for technical fluids is configured to alignment with the opening for technical fluids at the bottom of the seating cup by means of undercut, made on the outer surface of the bottom of the repair cup.

The technical result achieved by implementing the claimed solution is a relatively fast, cheap and simple repair of the hydraulic unit of the automatic transmission, without being replaced or machined to remove the damaged mounting cup of the automatic transmission hydraulic unit.

This technical solution further leads to increased reliability and increased service life of the hydraulic unit of the automatic transmission due to increased strength and reduced deformation.

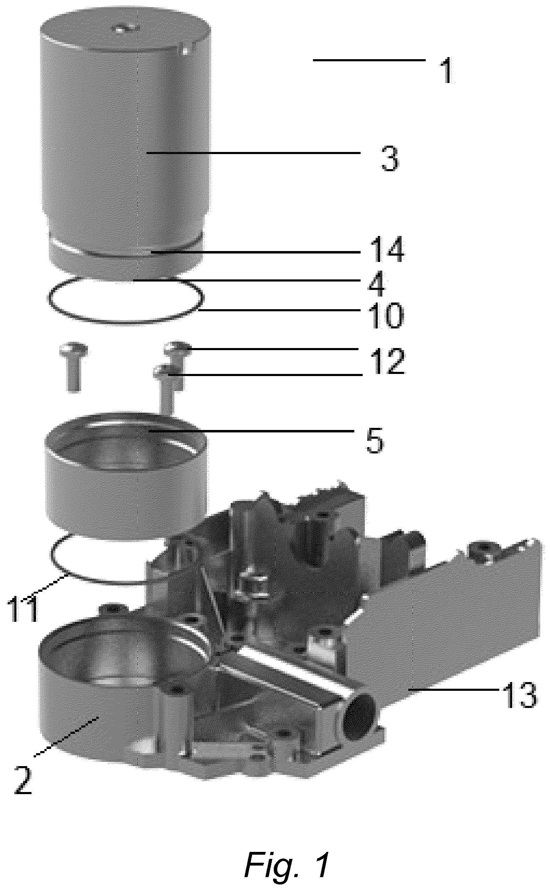

FIG. 1 shows a general view of the repair unit for a seating cup of a hydraulic unit of an automatic transmission.

The repair unit 1 for the seating cup 2 of the hydraulic unit of the automatic transmission consists of a hydraulic accumulator 3 with an external thread on the lower part 4 of the body and a repair cup 5 with an internal thread for fixing the hydraulic accumulator 3.

The repair cup 5 in an embodiment of the repair unit 1 is made with an outer diameter D1 smaller than the inner diameter D2 of the mounting cup 2 and larger than the diameter D3 of the circle, circumscribed around the openings 6 for technical fluids and openings 7 for fixing the hydraulic unit in the bottom of the seating cup; an inner diameter D4 configured to accommodate the hydraulic accumulator 3 inside the repair cup 5.

In a preferred embodiment, the outer diameter D1 is 66.40 mm, the inner diameter D2 of the seating cup is 2-66.50 mm, and the diameter D3 of the circle is 59.86 mm

The repair cup 5 is provided with a sealing ring 11 and a groove 15 for its placing on the outer surface of the bottom of the repair cup.

The hydraulic accumulator 3 is provided with a groove 14 for placing the sealing ring 10 and the O-ring 10 (Fig. 1).

The wall thickness of the repair cup 5 is preferably 2.95 mm, but can vary in the range of 2 to 6.50 mm

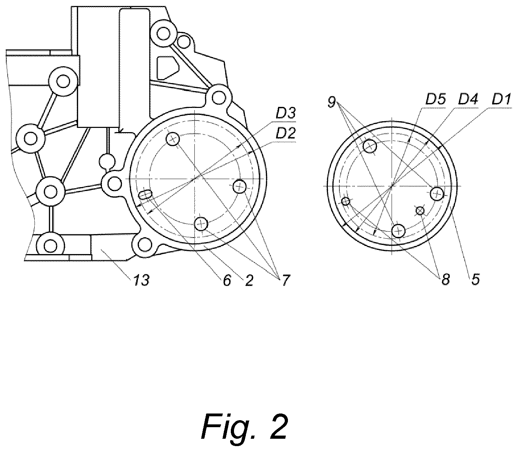

The repair cup 5 in another embodiment of the repair unit 1 (Fig. 2) is made with an outer diameter D1 smaller than the inner diameter D2 of the hydraulic unit seating cup 2 and larger than the diameter D3 of the circle circumscribed around the openings 6 for technical fluids and openings 7 for securing the hydraulic unit at the bottom of the seating cup.

In a preferred embodiment, the outer diameter D1 is 66.40 mm, inner diameter D2 of seating cup is 2 to 66.50 mm, and diameter D3 of circle is 59.86 mm

Openings 8 for technical fluids and openings 9 for fixing the hydraulic unit of the automatic transmission are made in the bottom of the repair cup 5 (Fig. 2).

The repair cup 5 is equipped with two openings 8 for technical fluids adapted to align with the openings 6 for technical fluids in the bottom of the seating cup and three openings 9 for securing the hydraulic unit 6, coinciding with the openings 7 for securing the hydraulic unit in the bottom of the seating cup 2.

The repair cup 5 is made with an inner diameter D4 greater than the diameter D5 of the circle circumscribed around the openings 8 for technical fluids and openings 9 for securing the hydraulic unit at the bottom of the repair cup. In a preferred embodiment, the inner diameter D4 is 60.50 mm and the diameter D5 is 54.00 mm

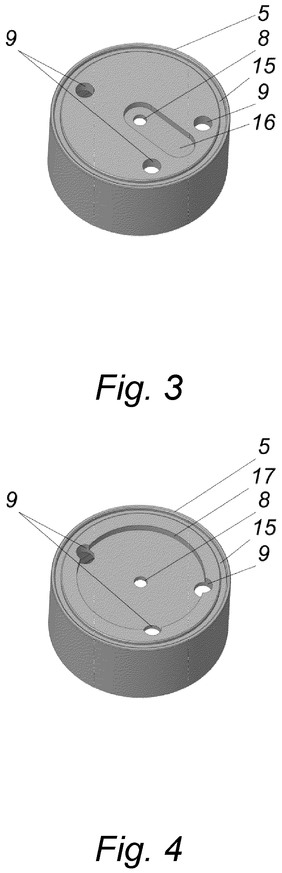

The wall thickness of the repair cup 5 in this embodiment is preferably 2.95 mm, but may range from 2 to 6.50 mm The repair cup 5 is provided with a sealing ring 11 and a groove 15 for its mounting, made on the outer surface of the bottom of the repair cup (Figs. 3, 4). The hydraulic accumulator 3 is provided with the O-ring 10 and a groove 14 for mounting the sealing ring 10 (Fig. 1).

The opening 8 for technical fluids may be configured to alignment with the opening for technical fluids at the bottom of the seating cup by means of a groove 16 provided on the outer surface of the bottom of the repair cup (FIG. 3).

The opening 8 for technical fluids may be configured to alignment with the opening for technical fluids at the bottom of the seating cup by means of undercut 17 provided on the outer surface of the bottom of the repair cup (FIG. 4).

Renovation using the first embodiment of the repair unit 1 for a seating cup 2 of a hydraulic unit of an automatic transmission is carried out as follows. The crankcase is removed from the hydraulic unit of the automatic transmission, the installed hydraulic accumulator is dismantled, the plate 13 of the hydraulic unit of the automatic transmission is removed. In some cases, dismantling of the hydraulic unit is required for this purpose.

The repair cup 5 is placed into the damaged seating cup 2 and fixed with clamps or otherwise.

Through the corresponding holes in the seating cup, holes 8 for technical fluids and holes 9 for fastening the hydraulic unit in the repair cup are made.

The parts are cleaned from the chips and the plate 13 is mounted without screwing the screws 12 located inside the seating cup. A repair cup 5 with a pre-installed O-ring 11 is placed in the damaged seating cup 2 simultaneously with alignment the corresponding openings of the seating and repair cups and fixed with screws 12.

In particular cases, sealing gaskets or sealant are used to seal. A sealing ring 10 is installed in the groove 14 of the hydraulic accumulator 3 and a hydraulic accumulator 3 is installed by screwing.

Repair using the second embodiment of the repair unit 1 for the seating cup 2 of the automatic transmission hydraulic unit is carried out as follows.

The crankcase is removed from the hydraulic unit of the automatic transmission, then the installed hydraulic accumulator is dismantled, the screws 12 fixing the plate 13 of the hydraulic unit of the automatic transmission located inside the seating cup 2 (3 pcs) are unscrewed. A repair cup 5 with a pre-installed O-ring mounted in the groove 15 is placed in the damaged seating cup 2, and, in particular cases, sealing gaskets or a sealant are used for sealing.

The technical fluids openings 6 and 8 and openings 7 and 9 for fixing the hydraulic unit are aligned. and then fixed by the fixing screws 12, a sealing ring 10 is installed in the groove 14 of the hydraulic accumulator 3 and a hydraulic accumulator 3 is installed by screwing.

Renovation is typically done without removing the hydraulic unit of the automatic transmission, but in separate cases repair requires removal of the hydraulic unit, therefore the hydraulic unit of the automatic transmission is dismantled.

The repair unit for the seating cup of the hydraulic unit of the automatic transmission according to present solution is made mainly of steel.

The repair unit allows for repair of the hydraulic unit of the automatic transmission and solves the problem associated with cracking or destruction of the hydraulic unit structure of the automatic transmission in the area of attachment of the hydraulic accumulator to hydraulic unit. The walls of the seating cup of the hydraulic unit at the attachment point of the hydraulic accumulator are relatively thin, which results in the formation of cracks, the loss of pressure in the system and the failure of the automatic transmission itself. Replacement of the hydraulic unit is a complex, expensive operation. Due to the structural solution of the repair unit, the technical fluid is prevented from entering the damaged areas of the seating cup. The use of the claimed device makes it possible to restore the operability of the seating cup of a hydraulic unit of an automatic transmission by additionally installing a repair unit in the seat of a hydraulic unit of an automatic transmission, repair of the automatic transmission hydraulic unit without its replacement or machining and removal of the damaged seating cup of the automatic transmission hydraulic unit and completely restore operation automatic transmission hydraulic system. In most cases, repair can be done under garage conditions and as a result of quick and simple installation to restore the operability of the hydraulic unit with cracks or

a broken threaded attachment of the hydraulic accumulator, as well as a repair without removal of the automatic transmission.

Use of the claimed device can be carried out not only for repair, but also to increase the service life of the hydraulic unit of the automatic transmission by increasing the strength and preventing destruction of the seat of the hydraulic unit an automatic transmission. Information Sources:
1. Patent RU 184057, publication date 12.10. 2018.
2. US Pat. No. 5,408, Publication No. 30082009
3. htp:// krutimotor.ru/gidroblok-akpp, access date 12042021
4. htps:// akpp.com/ua/0AM32506FF, access date 12042021

## Claims

1. A repair unit for a seating cup of a hydraulic unit of an automatic transmission, consisting of a hydraulic accumulator with an external thread on the lower part of the body and a repair cup with an internal thread for fixing the hydraulic accumulator, **characterized in that** the repair cup is made with:
- the outer diameter smaller than the inner diameter of the seating cup and greater than the diameter of the circle circumscribed around the openings for technical fluids and for fixing the hydraulic unit in the bottom of the seating cup;
- inner diameter, enabling accommodating the hydraulic accumulator of the repair unit inside the repair cup.

2. A repair unit as claimed in claim 1, **characterized in that** the repair cup is equipped with at least one sealing ring and a groove for its installation.

3. A repair unit as claimed in claims 1 to 2, **characterized in that** the accumulator is equipped with at least one sealing ring and a groove for its installation.

4. A repair unit as claimed in claims 1 to 3, **characterized in that** the repair cup is made with a wall thickness of 2 to 6.50 mm.

5. A repair unit for a seating cup of a hydraulic unit of an automatic transmission, consisting of the hydraulic accumulator with an external thread on the lower part of the body and the repair cup with an internal thread for fixing the hydraulic accumulator and openings in the bottom for technical fluids and fixing the hydraulic unit, **characterized in that the** repair cup is made with:
- the outer diameter less than the internal diameter of the seating cup and greater than the diameter of a circle circumscribed around the openings for technical fluids and fixing the hydraulic unit in the bottom of the seating cup;
- the internal diameter is larger than the diameter of a circle circumscribed around the openings for technical fluids and fixing the hydraulic unit in the bottom of the repair cup;
- with at least two openings for fixing the hydraulic unit, coinciding with the openings for fixing the hydraulic unit in the bottom of the seating cup;
- with at least one opening for technical fluids configured to align with the opening for technical fluids in the bottom of the seating cup.

6. A repair unit as claimed in claim 5, **characterized in that** the repair cup is equipped with at least one sealing ring and a groove for its placing.

7. A repair unit as claimed in claims 5 to 6, **characterized in that** the accumulator is equipped with at least one sealing ring and a groove for its placing.

8. A repair unit as claimed in claims 5 to 7, **characterized in that** the repair cup is made with a wall thickness of 2 to 6.50 mm.

9. A repair unit as claimed in claim 5 to 8, **characterized in that** the opening for technical fluids is configured to align with the opening for technical fluids in the bottom of the seating cup by means of the grooves made on the outer surface of the bottom of the repair cup.

10. A repair unit as claimed in claim 5 to 8, **characterized in that** the opening for technical fluids is configured to alignment with the opening for technical fluids in the bottom of the seating cup by means of undercuts made on the outer surface of the bottom of the repair cup.
